# EUROPÄISCHE PATENTSCHRIFT

(11) **EP 3 555 990 B1**
(45) Veröffentlichungstag und Bekanntmachung des Hinweises auf die Patenterteilung: **25.11.2020**
(21) Anmeldenummer: 17804543.1
(22) Anmeldetag: 27.11.2017
(51) Int. Cl.: H02J 7/02, H02J 7/00, B60L 53/14, B60L 53/20, B60L 58/20, H02J 7/34

(54) **ELEKTROMASCHINEN-ANORDNUNG**
ELECTRICAL MACHINE ARRANGEMENT
SYSTÈME DE MACHINES ÉLECTRIQUES

(30) Priorität: 15.12.2016 DE 102016225107
(43) Veröffentlichungstag der Anmeldung: 23.10.2019
(73) Patentinhaber: Bayerische Motoren Werke Aktiengesellschaft, 80809 München (DE)
(72) Erfinder: GRUBER, Dominik, 89365 Röfingen (DE)
(86) Internationale Anmeldenummer: PCT/EP2017/080446
(87) Internationale Veröffentlichungsnummer: WO 2018/108495

(56) Entgegenhaltungen:
- DE-A1-102010 029 788
- DE-A1-102011 101 531
- US-A1- 2010 133 023
- US-A1- 2010 222 953
- US-A1- 2011 202 220
- US-A1- 2013 264 869

## Beschreibung

Die vorliegende Erfindung betrifft eine Elektromaschinen-Anordnung für ein Kraftfahrzeug gemäß dem Anspruch 1 sowie ein damit ausgestattetes Kraftfahrzeug gemäß Anspruch 10.

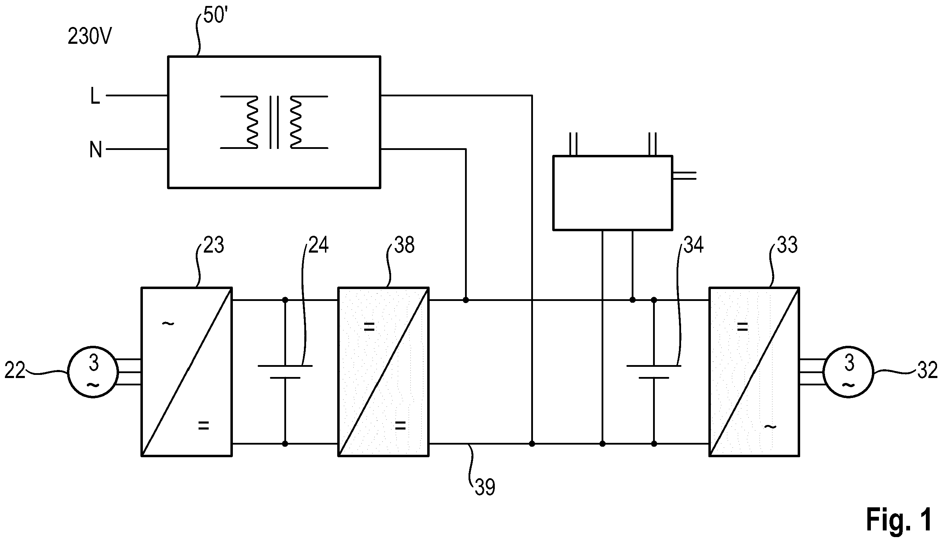

Es ist bekannt, gemäß Fig. 1 bei einem elektrischen Allradantrieb für ein Kraftfahrzeug zwei als Hochvoltspeicher (HVS) ausgebildete und über ein Ladegerät 50' aufladbare Energiespeicher 24, 34 und zwei über einen jeweiligen Wechselrichter 23 bzw. 33 angeschlossene elektrische Maschinen 22, 32 für den jeweiligen Antrieb der zwei Fahrzeugachsen vorzusehen. Die beiden Maschinen sowie ihre zugehörigen Hochvoltspeicher erfüllen dabei unterschiedliche Anforderungen bzw. Aufgaben. Ein Speicher 24 kann dabei als sogenannter High-Power-Speicher (HP-Speicher) mit leistungsoptimierten Zellen ausgelegt sein, der andere Speicher 34 als sogenannter High-Energy-Speicher (HE-Speicher) mit energieoptimierten Zellen. Vorzugsweise ist die dem High-Power-Speicher 24 zugeordnete Elektromaschine 22 eine auf Leistungsdichte optimierte Elektromaschine für Beschleunigung, während die dem High-Energy-Speicher 34 zugeordnete Elektromaschine 32 eine auf Effizienz optimierte Elektromaschine für die Konstantfahrt ist. Um einen Ladungsausgleich zwischen den beiden Energiespeichern sicherstellen zu können, ist ein DC/DC-Wandler 38 (mit mindestens drei Lastanschlüssen) in einem Zwischenkreis 39 zwischen den beiden Energiespeichern vorgesehen. Es ist von Nachteil, dass ein derartiger DC/DC-Wandler zusätzlichen Bauraum benötigt und entsprechende Schaltverluste bzw. Übertragungsverluste impliziert.

Eine Elektromaschinen-Anordnung gemäß Oberbegriff des Patentanspruches 1 findet sich im Dokument US 2010/133023A1. Ähnliche Elektromaschinen-Anordnungen finden sich auch in den Dokumenten DE 10 2011 101531 A1, US 2013/264869 A1, und DE 10 2010 029788 A1.

Der vorliegenden Erfindung liegt die Aufgabe zugrunde, diese Nachteile zu beseitigen und die Energieversorgung bei einer zwei Elektromaschinen umfassenden Elektromaschinen-Anordnung für ein Kraftfahrzeug dahingehend zu verbessern, dass sie weniger Bauraum erfordert und reduzierte Schaltverluste aufweist.

Diese Aufgabe wird gelöst mit einer Elektromaschinen-Anordnung gemäß Anspruch 1. Vorteilhafte Weiterbildungen der Erfindung sind Gegenstand der abhängigen Ansprüche.

Die erfindungsgemäße Elektromaschinen-Anordnung für ein Kraftfahrzeug umfasst eine erste Elektromaschine, einen mit ihr verbundenen ersten Energiespeicher für deren Stromversorgung, eine zweite Elektromaschine und einen mit ihr verbundenen zweiten Energiespeicher für deren Stromversorgung, der über einen Zwischenkreis mit dem ersten Energiespeicher verbunden ist. Die erfindungsgemäße Elektromaschinen-Anordnung weist ferner ein in den Zwischenkreis geschaltetes zweipoliges Koppelglied (also mit nur zwei Lastanschlüssen) auf, das eine Energieübertragung von dem zweiten Energiespeicher auf den ersten Energiespeicher zulässt und eine Energieübertragung von dem ersten Energiespeicher auf den zweiten Energiespeicher verhindern kann. In anderen Worten kann auf diese Weise Energie vom zweiten Energiespeicher zum ersten Energiespeicher übertragen werden. Aufgrund der genannten Ausgestaltung kann bei der erfindungsgemäßen Elektromaschinen-Anordnung anstatt des teuren und großen DC/DC-Wandlers ein einfaches, kleines und billiges Bauteil verwendet werden, das dessen Funktion übernehmen kann. Daher können der Bauraum und das Gewicht "eingespart" werden, den bzw. das ein DC/DC-Wandler ansonsten beanspruchen würde. Außerdem können die ansonsten am DC/DC-Wandler auftretenden Schaltverluste vermieden bzw. stark reduziert werden, und durch das Weglassen des DC/DC-Wandlers können Kosten eingespart werden.

Des Weiteren besteht bei der vorliegenden Erfindung der Vorteil, dass durch das Nachladen des ersten Energiespeichers aus dem zweiten Energiespeicher die Vorteile beim Vortrieb eines Elektrofahrzeugs mit Allradantrieb sehr lange aufrecht erhalten werden können, obwohl in der Regel der erste, für Beschleunigung "zuständige", Energiespeicher kleiner als der zweite Energiespeicher und somit ggf. früher entleert ist.

Grundlegend für diese Schalttopologie ist, dass der zweite Energiespeicher den Ladezustand des ersten Energiespeichers vorgibt, so dass der Ladezustand des ersten Energiespeichers immer größer oder gleich demjenigen des zweiten Energiespeichers ist. D.h., dass die erste Elektromaschine (für die hohe Beschleunigung) aus dem ersten Energiespeicher sowie indirekt über das Koppelglied auch aus dem zweiten Energiespeicher gespeist wird, so dass die für die erste Elektromaschine zur Verfügung stehende Leistung gleich der Summe der Leistungen des ersten und des zweiten Energiespeichers ist.

In vorteilhafter und kostengünstiger Weise kann das Koppelglied aus einer - für entsprechende Leistungen ausgelegten - Diode bestehen.

Alternativ kann das Koppelglied ebenfalls in vorteilhafter und kostengünstiger Weise aus einem Leistungstransistor mit einer solchen, hierzu parallel geschalteten Diode bestehen, wobei bei dieser Ausführungsform zusätzlich eine Regelungsschaltung zum Durchschalten des Leistungstransistors sowie zum Schalten der Lastflüsse in der Weise vorgesehen ist, dass Energie von dem ersten Energiespeicher über den Leistungstransistor des Koppelglieds an den zweiten Energiespeicher übertragbar ist. Dies kann beispielsweise beim Rekuperieren vorteilhaft sein.

Gemäß einer bevorzugten Ausführungsform ist ein - in der Regel ohnehin in einem Kraftfahrzeug vorgesehenes - Ladegerät in Parallelschaltung zum Koppelglied zwischen den ersten Energiespeicher und den zweiten Energiespeicher geschaltet, wobei das Ladegerät ebenfalls als DC/DC-Wandler zum Übertragen von Energie vom zweiten Energiespeicher auf den ersten Energiespeicher dienen kann. Das Ladegerät gemäß dieser Ausführungsform umfasst eine Primärseite und eine Sekundärseite. Auf der Primärseite ist ein erster Anschluss für die Verbindung mit einem Stromversorgungsnetz, wie beispielsweise dem bekannten Wechselspannungsnetz mit einer Spannung von 230 V, vorgesehen. Auf der Sekundärseite ist ein zweiter Anschluss für die Verbindung mit einem zweiten Energiespeicher der Elektromaschinen-Anordnung für das Kraftfahrzeug vorgesehen. Das erfindungsgemäße Ladegerät weist auf der Primärseite einen dritten Anschluss für die Verbindung mit einem ersten Energiespeicher der Elektromaschinen-Anordnung auf und ist darüber hinaus mit einer Regelungsschaltung - die häufig auch als Regelstruktur bezeichnet wird - ausgestattet, die die Lastflüsse bzw. Stromflüsse so umschalten kann, dass über den zweiten Anschluss Strom von dem zweiten Energiespeicher über den dritten Anschluss zu dem ersten Energiespeicher fließen kann. Durch das Laden des ersten Energiespeichers kann die Spannung im Zwischenkreis in maximal möglicher Höhe gehalten werden. Dadurch kann auch die Leistung der ersten Elektromaschine und somit die verfügbare Beschleunigung des Kraftfahrzeugs maximiert werden, da diese Leistung proportional zur Spannung im Zwischenkreis ist.

Es kann von Vorteil sein, wenn der dritte Anschluss und der erste Anschluss zu einem gemeinsamen Anschluss integriert sind. Auf diese Weise können beispielsweise am gleichen Anschluss je nach Bedarf bzw. Schaltsituation unterschiedliche Stecker eingesteckt werden, beispielsweise ein Netzstecker oder ein Verbindungsstecker zum ersten Energiespeicher, oder es kann zwischen den beiden Komponenten des integrierten Anschlusses umgeschaltet werden.

Gemäß einer vorteilhaften Weiterbildung der erfindungsgemäßen Elektromaschinen-Anordnung ist eine Schaltanordnung vorgesehen, welche das Herstellen und Trennen der Verbindung zwischen dem ersten Energiespeicher und dem dritten Anschluss des Ladegeräts ermöglicht. Durch Schließen der Schalter (zum Beispiel Relais oder Schütze) der Schaltanordnung kann somit das Ladegerät in einen Schaltzustand gebracht werden, in dem es - bei nicht angeschlossenem erstem Anschluss - zum Ausbalancieren der beiden Energiespeicher genutzt wird, wobei das Ladegerät als DC/DC-Wandler beim Laden des ersten Energiespeichers durch den zweiten Energiespeicher fungiert. Ist dagegen der erste Anschluss mit der Stromversorgung verbunden und sind die Schalter der Schaltanordnung geöffnet, wird der zweite Energiespeicher geladen, wobei zusätzlich der erste Energiespeicher über das Koppelglied mitgeladen wird.

Gemäß einer vorteilhaften Ausführungsform der erfindungsgemäßen Elektromaschinen-Anordnung ist der erste Energiespeicher ein Energiespeicher mit leistungsoptimierten Zellen zum Bereitstellen einer hohen Leistung - beispielsweise zum Beschleunigen des Kraftfahrzeugs - und der zweite Energiespeicher ein Energiespeicher mit energieoptimierten Zellen zum Bereitstellen einer möglichst hohen Energiemenge - beispielsweise zum Ermöglichen einer möglichst langen Fahrtstrecke (ohne große Beschleunigungsleistungen).

Vorzugsweise sind der erste Energiespeicher und der zweite Energiespeicher so ausgelegt, dass sie eine Betriebsspannung von 200 bis 1000 V, vorzugsweise eine Betriebsspannung von 260 bis 400 V, aufweisen.

Gemäß einer vorteilhaften Ausführungsform ist das Ladegerät so ausgestaltet, dass es zum Laden des als Energiespeicher mit leistungsoptimierten Zellen ausgebildeten ersten Energiespeichers - also zum Liefern einer hohen Leistung - sowie zum Laden des als Energiespeicher mit energieoptimierten Zellen ausgebildeten zweiten Energiespeichers - also zum Liefern einer möglichst großen Energiemenge - geeignet ist.

Gemäß einer weiteren vorteilhaften Ausführungsform ist das erfindungsgemäße Ladegerät so ausgelegt, dass es eine Betriebsspannung von 200 bis 1000 V, vorzugsweise 260 bis 400 V, in den Energiespeichern ermöglicht.

Die eingangs genannte Aufgabe wird außerdem gelöst durch ein Kraftfahrzeug, das eine erfindungsgemäße Elektromaschinen-Anordnung aufweist. Dementsprechend ergeben sich auch gleiche oder ähnliche Vorteile wie die in Verbindung mit dem vorstehend Beschriebenen, weshalb zur Vermeidung von Wiederholungen auf die vorstehenden Ausführungen im Zusammenhang mit der erfindungsgemäßen Vorrichtung verwiesen wird.

Einige vorteilhafte Ausführungsformen der Erfindung werden nachfolgend anhand der Figuren beispielhaft erläutert. Es zeigen:
Fig. 1 eine Elektromaschinen-Anordnung gemäß dem Stand der Technik,
Fig. 2 eine Elektromaschinen-Anordnung gemäß einer Ausführungsform der vorliegenden Erfindung,
Fig. 3 ein Beispiel eines für die erfindungsgemäße Elektromaschinen-Anordnung geeigneten Ladegeräts,
Fig. 4 ein erstes Beispiel für die Realisierung eines Koppelglieds,
Fig. 5 ein zweites Beispiel für die Realisierung eines Koppelglieds und
Fig. 6 eine Elektromaschinen-Anordnung gemäß einer weiteren Ausführungsform der vorliegenden Erfindung.

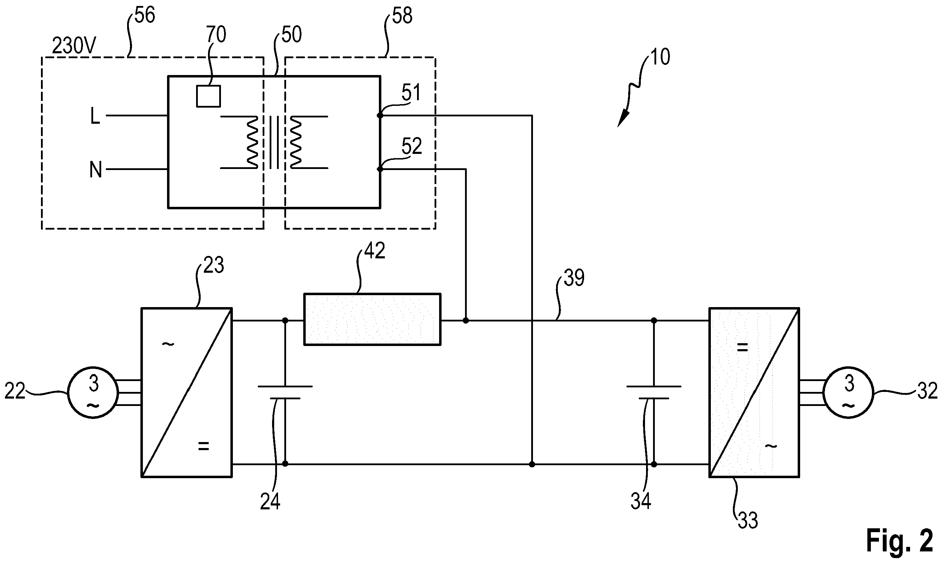

In Fig. 2 ist eine Ausführungsform einer - üblicherweise in einem Kraftfahrzeug eingebauten - erfindungsgemäßen Elektromaschinen-Anordnung 10 dargestellt. In Fig. 2 werden gleiche Bezugszeichen für gleiche Elemente verwendet, wie sie teilweise schon unter Verweis auf Fig. 1 beschrieben wurden. Eine erste Elektromaschine 22 (hier schematisch und beispielhaft dreiphasig dargestellt) wird über einen Wechselrichter 23 von einem ersten Energiespeicher 24 versorgt. Eine zweite Elektromaschine 32 (hier ebenfalls schematisch und beispielhaft dreiphasig dargestellt) wird über einen Wechselrichter 33 von einem zweiten Energiespeicher 34 versorgt.

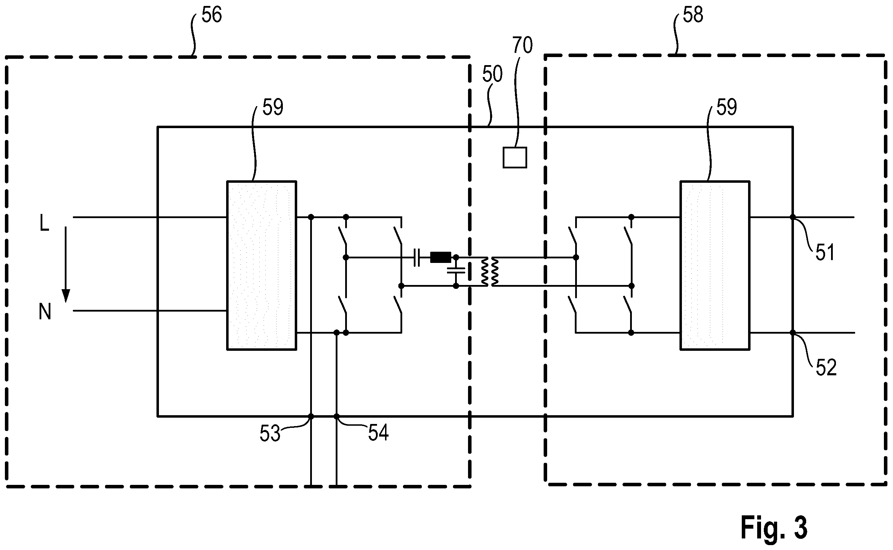

Für das Laden des zweiten Energiespeichers 34 ist ein Ladegerät 50 vorgesehen. Auf einer Primärseite 56 weist das Ladegerät 50 einen ersten Anschluss mit den Anschlusspolen L und N auf, die hier beispielhaft für ein "normales" Stromversorgungsnetz mit 230 V stehen. Auf einer Sekundärseite 58 weist das Ladegerät 50 einen zweiten Anschluss mit den Anschlusspolen 51 und 52 auf, an denen das Ladegerät 50 an den Zwischenkreis 39 und damit an den zweiten Energiespeicher 34 angeschlossen ist. Die Grundstruktur eines solchen Ladegeräts ist bekannt. Ein Beispiel hiervon ist in dem Buch von Helmut Tschöke: "Die Elektrifizierung des Antriebsstrangs", ISBN 978-3-658-04643-9, insbesondere Seiten 80-85, ausführlich beschrieben. Weitere Komponenten des Ladegeräts 50 (vergleiche Fig. 3), wie beispielsweise die sowohl auf der Primärseite 56 als auch auf der Sekundärseite 58 aus Gründen der EMV-Verträglichkeit angeordneten PFCs (Power Factor Correction) 59 sowie die entsprechenden Schalter etc. werden daher nicht detailliert beschrieben, da sie als bekannt vorausgesetzt werden können.

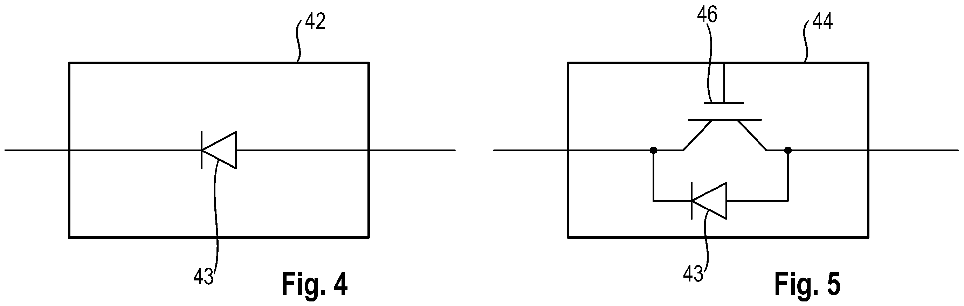

Im Zwischenkreis 39 ist ein Koppelglied 42 (gemäß dem in Fig. 4 dargestellten Beispiel eine Diode 43) oder ein Koppelglied 44 (gemäß dem in Fig. 5 dargestellten Beispiel eine Diode 43 mit einem parallel dazu geschalteten Leistungstransistor 46 wie einem MOSFET oder einem IGBT, vergleiche Fig. 5) zwischen die zwei Energiespeicher 24, 34 geschaltet.

Wie aus Fig. 2 ersichtlich ist, kann bei Erhöhung der Spannung im Zwischenkreis 39 nicht nur der zweite Energiespeicher 34 geladen werden, sondern über das Koppelglied 42 (bzw. über das Koppelglied 44) auch der erste Energiespeicher 24.

Wird ein Koppelglied 42 gemäß Fig. 4 verwendet, wird die zweite Elektromaschine 32 wegen der Sperrwirkung der Diode 43 nur aus dem zweiten Energiespeicher 34 gespeist. Wird dagegen ein Koppelglied 44 gemäß Fig. 5 verwendet, kann die zweite Elektromaschine 32 durch Einschalten des Leistungstransistors 46 durch beide Energiespeicher 24, 34 gespeist werden. In diesem Fall können beispielsweise beim Übertragen von Energie vom zweiten Energiespeicher 34 auf den ersten Energiespeicher 24 die Durchlassverluste des Koppelglieds 44 durch Einschalten des Leistungstransistors 46 reduziert werden. Hierfür ist bei dieser Ausführungsform eine Regelungsschaltung 70 vorgesehen. Vorzugsweise ist die Regelungsschaltung 70 außerdem so ausgestaltet, dass sie neben dem Durchschalten des Leistungstransistors 46 auch die Lastflüsse in der Weise umschalten kann, dass Energie von dem ersten Energiespeicher 24 über den Leistungstransistor 46 des Koppelglieds 44 an den zweiten Energiespeicher 34 übertragen werden kann, was beispielsweise beim Rekuperieren von Vorteil sein kann.

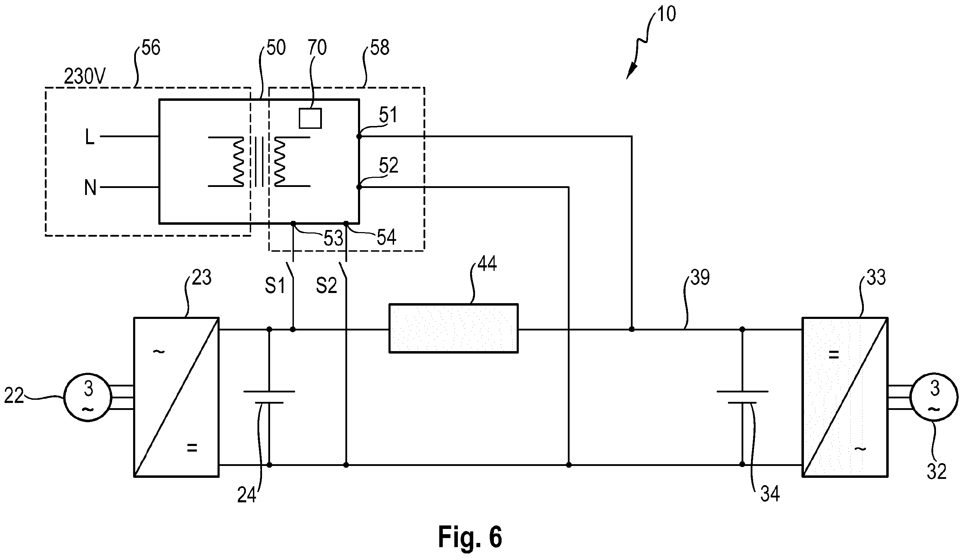

In Fig. 6 ist eine weitere Ausführungsform der erfindungsgemäßen Elektromaschinen-Anordnung 10 dargestellt. Bei dieser Ausführungsform weist das Ladegerät 50 darüber hinaus einen dritten Anschluss mit den Anschlusspolen 53 und 54 auf, vergleiche auch Fig. 3, die auf der Primärseite 56 mit den zu den Anschlusspolen L bzw. N führenden Leitungen verbunden sind. Die beiden Anschlusspole 53 und 54 können über eine Schaltanordnung (mit den Schaltern S1 und S2) mit dem ersten Energiespeicher 24 verbunden werden. Schließlich weist das erfindungsgemäße Ladegerät 50 die (nur schematisch dargestellte) Regelungsschaltung 70 auf.

Die Regelungsschaltung 70 ist so ausgelegt, dass sie zusätzlich die Last- bzw. Stromflüsse in dem Ladegerät 50 so umschalten kann, dass einerseits Strom von den ersten Anschlusspolen L, N über die Primärseite 56 zur Sekundärseite 58 und dann über die zweiten Anschlusspole 51, 52 weiter zum zweiten Energiespeicher 34 fließen kann, womit letzterer geladen werden kann. In diesem Fall trägt die Regelungsschaltung 70 dafür Sorge, dass die Schaltanordnung mit den Schaltern S1 und S2 geöffnet ist und somit keine Verbindung zwischen den beiden Anschlusspolen 53, 54 und dem ersten Energiespeicher 24 besteht. Andererseits kann die Regelungsschaltung 70 (z.B. während der Fahrt) die beiden Schalter S1 und S2 schließen und die Lastströme so schalten, dass Strom von dem zweiten Energiespeicher 34 über die zweiten Anschlusspole 51, 52, die Sekundärseite 58 und die Primärseite 56 über die beiden Anschlusspole 53 und 54 sowie die geschlossenen Schalter S1 und S2 zum ersten Energiespeicher 24 fließt und diesen lädt. Das Ladegerät 50 fungiert bei dieser Ausführungsform der erfindungsgemäßen Elektromaschinen-Anordnung 10 somit als DC/DC-Wandler und ermöglicht somit die Einsparung eines ansonsten erforderlichen eigenständigen DC/DC-Wandlers. Da durch das Nachladen auf die maximale Spannung im ersten Energiespeicher 24 auch die Zwischenkreisspannung maximal wird, erhöht sich demzufolge auch die Leistung der zweiten Elektromaschine, da ihre Leistung ebenfalls proportional zur Spannung im Zwischenkreis ist.

Alternativ kann die Anordnung so getroffen sein, dass statt der beschriebenen einen Regelungsschaltung 70, die alle genannten Regelungsfunktionen ausführen kann, getrennte Regelungsschaltungen zum Ansteuern des Leistungstransistors 46 des Koppelglieds 44 einerseits und zum Ansteuern bzw. Regeln des Ladegeräts 50 andererseits vorgesehen sind.

Es ist festzuhalten, dass die unter Bezug auf einzelne Ausführungsformen bzw. Varianten beschriebenen Merkmale der Erfindung, wie beispielsweise Art und Ausgestaltung der einzelnen Koppelglieder, Schalter, Energiespeicher und Elektromaschinen sowie weiterer Komponenten, sowie deren räumliche Anordnung, auch bei anderen Ausführungsformen vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.

## Patentansprüche

1. Elektromaschinen-Anordnung (10) für ein Kraftfahrzeug, umfassend
- eine erste Elektromaschine (22),
- einen mit der ersten Elektromaschine (22) verbundenen ersten Energiespeicher (24) für deren Stromversorgung,
- eine zweite Elektromaschine (32),
- einen mit der zweiten Elektromaschine (32) verbundenen zweiten Energiespeicher (34) für deren Stromversorgung, der über einen Zwischenkreis (39) mit dem ersten Energiespeicher (24) verbunden ist, wobei
die erste Elektromaschine (22) und die zweite Elektromaschine (32) für einen jeweiligen Antrieb von zwei Fahrzeugachsen der Kraftfahrzeuges dienen, **dadurch gekennzeichnet, dass** die Elektromaschinen-Anordnung (10) weiterhin umfasst:
- ein in den Zwischenkreis (39) geschaltetes zweipoliges Koppelglied (42) mit zwei Lastanschlüssen, das eine Energieübertragung von dem zweiten Energiespeicher (34) auf den ersten Energiespeicher (24) zulässt und eine Energieübertragung von dem ersten Energiespeicher (24) auf den zweiten Energiespeicher (34) verhindern kann, und
- ein an ein Stromversorgungsnetz anschließbares Ladegerät zum Laden des ersten und zweiten Energiespeichers (24, 34), das an den Zwischenkreis (39) und damit an den zweiten Energiespeicher (34) angeschlossen ist,
wobei das Ladegerät derart an den Zwischenkreis angeschlossen ist, dass es durch Erhöhung einer Spannung in dem Zwischenkreis (39) den ersten und zweiten Energiespeicher (24, 34) auflädt.

2. Elektromaschinen-Anordnung (10) nach Anspruch 1,
wobei das Koppelglied (42) aus einer Diode (43) besteht.

3. Elektromaschinen-Anordnung (10) nach Anspruch 1,
wobei
das Koppelglied (44) aus einer Diode (43) und einem parallel dazu geschalteten Leistungstransistor (46) besteht und
eine Regelungsschaltung (70) zum Durchschalten des Leistungstransistors (46) sowie zum Schalten der Lastflüsse in der Weise, dass Energie von dem ersten Energiespeicher (24) über den Leistungstransistor (46) des Koppelglieds (44) an den zweiten Energiespeicher (34) übertragbar ist, vorgesehen ist.

4. Elektromaschinen-Anordnung (10) nach einem der vorhergehenden Ansprüche,
wobei das Ladegerät (50) in Parallelschaltung zum Koppelglied (42, 44) zwischen den ersten Energiespeicher (24) und den zweiten Energiespeicher (34) geschaltet ist und als DC/DC-Wandler zum Übertragen von Energie vom zweiten Energiespeicher (34) auf den ersten Energiespeicher (24) dient, wobei das Ladegerät (50) dem Aufladen der Energiespeicher (24, 34) der Elektromaschinen-Anordnung (10) dient und umfasst:
- eine Primärseite (56) mit einem ersten Anschluss (L, N) für den Anschluss an ein Stromversorgungsnetz,
- eine Sekundärseite (58) mit einem zweiten Anschluss (51, 52) für den Anschluss an den zweiten Energiespeicher (34),
- einen dritten Anschluss (53, 54) auf seiner Primärseite (56) für den Anschluss an den ersten Energiespeicher (24), und
- eine Regelungsschaltung (70) zum Umschalten der Lastflüsse in der Weise, dass über den zweiten Anschluss (51, 52) Energie von dem zweiten Energiespeicher (34) über den dritten Anschluss (53, 54) an den ersten Energiespeicher (24) übertragbar ist.

5. Elektromaschinen-Anordnung (10) nach Anspruch 4,
wobei der dritte Anschluss (53, 54) und der erste Anschluss (L, N) zu einem gemeinsamen Anschluss integriert sind.

6. Elektromaschinen-Anordnung (10) nach Anspruch 4 oder 5,
wobei eine Schaltanordnung (S1, S2) zum Herstellen und Trennen der Verbindung zwischen dem ersten Energiespeicher (24) und dem dritten Anschluss (53, 54) des Ladegeräts (50) vorgesehen ist.

7. Elektromaschinen-Anordnung (10) nach einem der vorhergehenden Ansprüche,
wobei der erste Energiespeicher (24) ein Energiespeicher mit leistungsoptimierten Zellen zum Bereitstellen einer hohen Leistung und der zweite Energiespeicher (34) ein Energiespeicher mit energieoptimierten Zellen zum Bereitstellen einer hohen Energie ist.

8. Elektromaschinen-Anordnung (10) nach einem der vorhergehenden Ansprüche,
wobei das Ladegerät (50) so ausgestaltet ist, dass es zum Laden des als Energiespeicher mit leistungsoptimierten Zellen zum Bereitstellen einer hohen Leistung ausgelegten ersten Energiespeichers (24) und zum Laden des als Energiespeicher mit energieoptimierten Zellen zum Bereitstellen einer hohen Energie ausgelegten zweiten Energiespeichers (34) geeignet ist.

9. Elektromaschinen-Anordnung (10) nach einem der vorhergehenden Ansprüche,
wobei das Ladegerät (50) zum Laden des ersten Energiespeichers (24) und zum Laden des zweiten Energiespeichers (34) auf eine Spannung von 200 bis 1000 V, vorzugsweise 260 bis 400 V, geeignet ist.

10. Kraftfahrzeug, umfassend eine Elektromaschinen-Anordnung (10) nach einem der Ansprüche 1 bis 9.

## Claims

1. Electrical machine arrangement (10) for a motor vehicle, comprising
- a first electrical machine (22),
- a first energy store (24) which is connected to the first electrical machine (22) for the purpose of supplying power to the latter,
- a second electrical machine (32),
- a second energy store (34) which is connected to the second electrical machine (32) for the purpose of supplying power to the latter and is connected to the first energy store (24) via an intermediate circuit (39), wherein
the first electrical machine (22) and the second electrical machine (32) are used to respectively drive two vehicle axles of the motor vehicle, **characterized in that** the electrical machine arrangement (10) also comprises:
- a two-pole coupling element (42) having two load connections, which coupling element is connected into the intermediate circuit (39), allows energy to be transmitted from the second energy store (34) to the first energy store (24) and can prevent energy from being transmitted from the first energy store (24) to the second energy store (34), and
- a charging device for charging the first and second energy stores (24, 34), which charging device can be connected to a power supply network and is connected to the intermediate circuit (39) and therefore to the second energy store (34),
wherein the charging device is connected to the intermediate circuit in such a manner that it charges the first and second energy stores (24, 34) by increasing a voltage in the intermediate circuit (39).

2. Electrical machine arrangement (10) according to Claim 1,
wherein the coupling element (42) comprises a diode (43).

3. Electrical machine arrangement (10) according to Claim 1,
wherein the coupling element (44) comprises a diode (43) and a power transistor (46) connected in parallel with the latter, and
a regulation circuit (70) for turning on the power transistor (46) and for switching the load flows in such a manner that energy can be transmitted from the first energy store (24) to the second energy store (34) via the power transistor (46) of the coupling element (44) is provided.

4. Electrical machine arrangement (10) according to one of the preceding claims,
wherein the charging device (50) is connected in parallel with the coupling element (42, 44) between the first energy store (24) and the second energy store (34) and is used as a DC/DC converter for transmitting energy from the second energy store (34) to the first energy store (24), wherein the charging device (50) is used to charge the energy stores (24, 34) of the electrical machine arrangement (10) and comprises:
- a primary side (56) having a first connection (L, N) for connection to a power supply network,
- a secondary side (58) having a second connection (51, 52) for connection to the second energy store (34),
- a third connection (53, 54) on its primary side (56) for connection to the first energy store (24), and
- a regulation circuit (70) for changing over the load flows in such a manner that energy can be transmitted from the second energy store (34), via the second connection (51, 52), to the first energy store (24) via the third connection (53, 54).

5. Electrical machine arrangement (10) according to Claim 4,
wherein the third connection (53, 54) and the first connection (L, N) are integrated to form a common connection.

6. Electrical machine arrangement (10) according to Claim 4 or 5,
wherein a switching arrangement (S1, S2) for establishing and disconnecting the connection between the first energy store (24) and the third connection (53, 54) of the charging device (50) is provided.

7. Electrical machine arrangement (10) according to one of the preceding claims,
wherein the first energy store (24) is an energy store with power-optimized cells for providing high power and the second energy store (34) is an energy store with energy-optimized cells for providing high energy.

8. Electrical machine arrangement (10) according to one of the preceding claims,
wherein the charging device (50) is configured in such a manner that it is suitable for charging the first energy store (24) in the form of an energy store with power-optimized cells for providing high power and for charging the second energy store (34) in the form of an energy store with energy-optimized cells for providing high energy.

9. Electrical machine arrangement (10) according to one of the preceding claims,
wherein the charging device (50) is suitable for charging the first energy store (24) and for charging the second energy store (34) to a voltage of 200 to 1000 V, preferably 260 to 400 V.

10. Motor vehicle comprising an electrical machine arrangement (10) according to one of Claims 1 to 9.

## Revendications

1. Ensemble de machines électriques (10) destiné à un véhicule automobile, ledit ensemble comprenant
- une première machine électrique (22),
- un premier accumulateur d'énergie (24) relié à la première machine électrique (22) et destiné à alimenter celle-ci en courant,
- une deuxième machine électrique (32),
- un deuxième accumulateur d'énergie (34) relié à la deuxième machine électrique (32), destiné à alimenter celle-ci en courant et relié au premier accumulateur d'énergie (24) par le biais d'un circuit intermédiaire (39),
la première machine électrique (22) et la deuxième machine électrique (32) étant utilisées pour entraîner respectivement deux essieux du véhicule automobile, **caractérisé en ce que** l'ensemble de machines électrique (10) comprend en outre :
- un élément de couplage bipolaire (42) monté dans le circuit intermédiaire (39), comportant deux bornes de charge et permettant un transfert d'énergie du deuxième accumulateur d'énergie (34) au premier accumulateur d'énergie (24) et empêchant un transfert d'énergie du premier accumulateur d'énergie (24) au deuxième accumulateur d'énergie (34), et
- un chargeur pouvant être raccordé à un réseau d'alimentation en courant, destiné à charger les premier et deuxième accumulateurs d'énergie (24, 34) et étant raccordé au circuit intermédiaire (39) et donc au deuxième accumulateur d'énergie (34),
le chargeur étant raccordé au circuit intermédiaire de manière à charger les premier et deuxième accumulateurs d'énergie (24, 34) en augmentant une tension dans le circuit intermédiaire (39).

2. Ensemble de machines électriques (10) selon la revendication 1,
l'élément de couplage (42) comprenant une diode (43).

3. Ensemble de machines électriques (10) selon la revendication 1,
l'élément de couplage (44) comprenant une diode (43) et un transistor de puissance (46) monté en parallèle avec celle-ci, et
un circuit de régulation (70) étant prévu pour connecter le transistor de puissance (46) et pour commuter les flux de charge de manière à transférer l'énergie du premier accumulateur d'énergie (24) au deuxième accumulateur d'énergie (34) par le biais du transistor de puissance (46) de l'élément de couplage (44) .

4. Ensemble de machines électriques (10) selon l'une des revendications précédentes,
le chargeur (50) étant monté en parallèle avec l'élément de couplage (42, 44) entre le premier accumulateur d'énergie (24) et le deuxième accumulateur d'énergie (34) et servant de convertisseur CC/CC pour transférer de l'énergie du deuxième accumulateur d'énergie (34) au premier accumulateur d'énergie (24), le chargeur (50) servant à charger les accumulateurs d'énergie (24, 34) de l'ensemble de machines électriques (10) et comprenant :
- un côté primaire (56) pourvu d'une première borne (L, N) destinée au raccordement à un réseau d'alimentation en courant,
- un côté secondaire (58) pourvu d'une deuxième borne (51, 52) destinée au raccordement au deuxième accumulateur d'énergie (34),
- une troisième borne (53, 54) sur son côté primaire (56) destinée au raccordement au premier accumulateur d'énergie (24), et
- un circuit de régulation (70) destiné à commuter les flux de charge de manière à pouvoir transférer de l'énergie, par le biais de la deuxième borne (51, 52), du deuxième accumulateur d'énergie (34), par le biais de la troisième borne (53, 54), au premier accumulateur d'énergie (24).

5. Ensemble de machines électriques (10) selon la revendication 4,
la troisième borne (53, 54) et la première borne (L, N) étant intégrées à une borne commune.

6. Ensemble de machines électriques (10) selon la revendication 4 ou 5,
un ensemble de commutation (S1, S2) étant prévu pour établir et couper la liaison entre le premier accumulateur d'énergie (24) et la troisième borne (53, 54) du chargeur (50).

7. Ensemble de machines électriques (10) selon l'une des revendications précédentes,
le premier accumulateur d'énergie (24) étant un accumulateur d'énergie comprenant des cellules à puissance optimisée destinées à produire une puissance élevée et le deuxième accumulateur d'énergie (34) étant un accumulateur d'énergie comprenant des cellules à énergie optimisée destinés à produire une énergie élevée.

8. Ensemble de machines électriques (10) selon l'une des revendications précédentes,
le chargeur (50) étant conçu de manière à être approprié pour charger le premier accumulateur d'énergie (24) conçu comme accumulateur d'énergie comprenant des cellules à puissance optimisée destinées à produire une puissance élevée et pour charger le deuxième accumulateur d'énergie (34) conçu comme accumulateur d'énergie comprenant des cellules à énergie optimisée destinées à produire une énergie élevée.

9. Ensemble de machines électriques (10) selon l'une des revendications précédentes,
le chargeur (50) étant approprié pour charger le premier accumulateur d'énergie (24) et pour charger le deuxième accumulateur d'énergie (34) à une tension de 200 à 1000 V, de préférence de 260 à 400 V.

10. Véhicule automobile, comprenant un ensemble de machines électriques (10) selon l'une des revendications 1 à 9.
